# EUROPÄISCHE PATENTANMELDUNG

(11) **EP 1 632 681 A2**
(43) Veröffentlichungstag der Anmeldung: **08.03.2006**
(21) Anmeldenummer: 05017682.5
(22) Anmeldetag: 13.08.2005
(51) Int. Cl.: F16B 5/00, B62D 25/06, B60J 7/00

(54) **Verbundbauteil**

(30) Priorität: 26.08.2004 DE 102004041685
(71) Anmelder: Bayer MaterialScience AG, 51368 Leverkusen (DE)
(72) Erfinder: Krause, Frank, 51469 Bergisch Gladbach (DE)

(57) **Zusammenfassung**

Die Erfindung beschreibt ein Verbundbauteil wenigstens bestehend aus zwei Formteilen mit unterschiedlichen thermischen Längenausdehnungskoeffizienten, welche mittels wenigstens eines Verbindungselements aus einem elastischen Material verbunden sind, wobei das Verbindungselement wenigstens ein Schubelement aufweist, welches schubflexibel verformbar ist und ein Verhältnis von Höhe zu Dicke von 2 bis 60 aufweist.

## Beschreibung

Die Erfindung betrifft ein Verbundbauteil, wenigstens bestehend aus zwei Formteilen mit unterschiedlichen thermischen Längenausdehnungskoeffizienten, welche mittels wenigstens eines Verbindungselements aus einem elastischen Material verbunden sind.

Bei Verbundbauteilen aus einem Metall-Formteil und einem Kunststoff-Formteil, welche miteinander verbunden sind, zeigt sich häufig das Problem, dass aufgrund der unterschiedlichen thermischen Längenausdehnungskoeffizienten der beiden Werkstoffe Spannungen oder Verformungen auftreten. Werden beispielsweise für die Verscheibung von Fahrzeugdächem anstelle von Glas Scheiben aus Polycarbonat eingesetzt, weisen Polycarbonatscheiben im Vergleich zu Glasscheiben eine wesentlich höhere Verformung bei Wärmebelastung durch die unterschiedlichen Längenausdehnungskoeffizienten von Polycarbonat zu Stahl auf. Die Scheiben aus Polycarbonat werden beispielsweise mittels Klebstoff mit dem Fahrzeugdach aus Stahl verbunden, während Glasscheiben üblicherweise mittels Klemmdichtungen oder Klebstoff befestigt werden. Wenn sich unter starker Erwärmung die Polycarbonatscheiben ausdehnen, kann der Klebstoff die Längenausdehnung nicht ausreichend ausgleichen, sodass die Scheiben verbeulen. Bei Glasscheiben besteht aufgrund der geringeren Unterschiede des Längenausdehnungskoeffizienten zum Stahl und der höheren Eigensteifigkeit im Vergleich zum Polycarbonat dieses Problem der Verformung nicht.

DE 43 30 030 C offenbart eine Baueinheit zur Kraftübertragung in und zwischen fasertechnischen und anderen Bauteilen, das eine möglichst optimale Scherkrafteinleitung vom fasertechnischen Bauteil gewährleistet.

Aufgabe der vorliegenden Erfindung ist es daher, ein Verbundelement, wenigstens bestehend aus zwei Formteilen mit unterschiedlichen thermischen Längenausdehnungskoeffizienten, insbesondere einem Formteil aus Metall und einem Formteil aus Kunststoff, bereitzustellen, bei dem die Formteile derart miteinander verbunden sind, dass ein Längenausgleich der beiden Formteile möglich ist. Dadurch sollen unerwünschte Verformungen der Formteile, insbesondere des Kunststoff-Formteils, aufgrund der unterschiedlichen thermischen Längenausdehnung der Formteile verhindert werden. Gleichzeitig sollen die auftretenden äußeren Kräfte, wie z.B. Windlast im Falle der Fahrzeugverscheibung, aufgenommen werden, sodass die Verformung durch mechanische Belastungen und das Eigenfrequenzverhalten nicht verschlechtert werden.

Gegenstand der Erfindung ist ein Verbundbauteil wenigstens bestehend aus zwei Formteilen mit unterschiedlichen thermischen Längenausdehnungskoeffizienten, welche mittels wenigstens eines Verbindungselements aus einem elastischen Material verbunden sind, wobei das Verbindungselement wenigstens ein Schubelement aufweist, welches schubflexibel verformbar ist und ein Verhältnis von Höhe zu Dicke von 2 bis 60 aufweist.

Das erfindungsgemäße Verbundbauteil besteht wenigstens aus zwei Formteilen, welche unterschiedliche thermische Längenausdehnungskoeffizienten besitzen. Der Unterschied der Längenausdehnungskoeffizienten beträgt bevorzugt mindestens 20·10⁻⁶ K⁻¹ sowie bevorzugt maximal 100·10⁻⁶ K⁻¹.

Wenigstens eines der Formteile kann z.B. aus Metall, vorzugsweise aus Stahl, Aluminium, Magnesium, Kupfer, Titan und/oder einer Legierung dieser Metalle, sein. Besonders bevorzugt besteht eines der Formteile aus Stahl.

Wenigstens eines der Formteile kann z.B. aus Kunststoff, vorzugsweise aus PC, PMMA, ABS, ASA, PA, PBT, PP oder Blends aus diesen Kunststoffen sein. Besonders bevorzugt besteht eines der Formteile aus Polycarbonat.

Die Formteile können beliebige geometrische Formen aufweisen. Sie können z.B. Platten, Halbschalen oder Rahmenelemente sein. Vorzugsweise handelt es sich bei einem der Formteile um ein Fahrzeugdach aus Stahl mit einer Aussparung für eine Fensterscheibe und bei einem weiteren Formteil um ein Platte aus Polycarbonat zur Verscheibung des Fahrzeugdachs.

Die Formteile sind mittels wenigstens eines Verbindungselements aus einem elastischen Material verbunden. Das elastische Material des Verbindungselements ist vorzugsweise ein Kunststoff, insbesondere Thermoplastisches Polyurethan (TPU), Thermoplastisches Elastomer (TPE), Kautschuk, unverstärktes Polyamid, PP und/oder PE.

Das Verbindungselement weist wenigstens ein Schubelement auf, welches schubflexibel verformbar ist und ein Verhältnis von Höhe zu Dicke von 2 bis 60 aufweist. Höhe und Dicke des Schubelements beziehen sich auf den Ruhezustand, d.h. ohne angreifende Schubkraft. Dabei wird als Höhe des Schubelements die Ausdehnung zwischen den beiden Verbindungspunkten des Schubelements mit den Formteilen angesehen. Steht das Schubelement rechtwinklig zu den beiden Formteilen, so entspricht die Höhe des Schubelements im Wesentlichen dem Abstand zwischen den beiden Formteilen im Verbindungsbereich. Als Dicke wird die geringere der beiden senkrecht zur Höhe stehenden Ausdehnungen des Schubelements angesehen. Die Dicke erstreckt sich somit parallel zur Verschiebung der beiden Formteile zueinander, d.h. zur Richtung der angreifenden Schubkraft.

Die Formteile können prinzipiell an beliebiger Stelle über das Verbindungselement miteinander verbunden sein, wobei sie in dem Verbindungsbereich einander überlappen. Sie können beispielsweise beispielsweise ganz oder teilweise übereinander angeordnet sein. Die Formteile können z.B. in jeweils einem Randbereich übereinander angeordnet sein, d.h. Randbereiche der beiden Formteile überlappen sich.

In überlappenden Bereichen sorgt das Verbindungselement für eine schubflexible Verbindung der beiden Formteile, da das Verbindungselement erfindungsgemäß aus einem elastischen Material und schubflexibel verformbar ist mit einem Verhältnis von Höhe zu Dicke von 2 bis 60. Ein hohes Höhe zu Dicke Verhältnis des Schubelements ermöglicht im Vergleich zu einer Verbindung mittels Klebstoff eine höhere Schubflexibilität. Somit erlaubt das erfindungsgemäße Verbindungselement die unter Wärmebelastung unterschiedliche Längenausdehnung der beiden Formteile auszugleichen, ohne dass unerwünschte Verformungen, z.B. Beulen, der Formteile auftreten. Dies geschieht erfindungsgemäß durch eine Relativbewegung zwischen den beiden Formteilen mit verhältnismäßig geringem Kraftaufwand.

Das Schubelement kann z.B. lamellenförmig oder stabförmig sein. Bei einem lamellenförmigen Schubelement entspricht die Dicke der Wanddicke des Schubelements. Bei einem stabförmigen Schubelement mit einem im Wesentlichen runden Querschnitt entspricht die Dicke des Schubelements dem Durchmesser des stabförmigen Schubelements. Weist ein stabförmiges Schubelement beispielsweise einen quadratischen Querschnitt auf, so entspricht die Dicke der Kantenlange quadratischen Querschnitts. Weitere regelmäßige oder unregelmäßige geometrische Formen sind möglich, sofern sie ein Verhältnis von Höhe zu Dicke von 2 bis 60 aufweisen. Ist das Verbindungselement aus mehreren Schubelementen aufgebaut, können die Schubelemente gleich oder verschieden sein.

In einer ersten Ausführungsform weist das Verbindungselement lamellenförmige Schubelemente auf, welche in Schubrichtung flexibel verformbar sind, aber rechtwinklig dazu, d.h. in Richtung der Lamellen, Kräfte gut übertragen können. Die lamellenförmigen Elemente sind gegenüber den Längskräften, welche bei Temperaturänderung auftreten biegeweich, sodass eine Verschiebung der beiden Formteile relativ zueinander möglich ist. Dies verhindert unerwünschte Verformungen der Formteile aufgrund der unterschiedlichen Längenausdehnung. Diese Ausführungsform kann beispielsweise derart gestaltet sein, dass die lamellenförmigen Schubelemente aus elastischem Material über Endelemente miteinander verbunden sind, wobei die Endelemente jeweils an den oberen und unteren Enden der Schubelemente angeordnet sind. Als obere und untere Enden der Schubelemente werden die den Formteilen zugewandten Enden angesehen. Derartige Endelemente sind streifenförmig, plattenförmig o.dgl. Dabei ist jeweils ein Endelement mit jeweils einem der Formteile verbunden. Die Verbindung eines Endelements mit einem Formteil kann beispielsweise mittels Kleben, Schrauben, Nieten, Clinchen erfolgen.

In dieser Ausführungsform kann das Verbindungselement neben der Verbindung der beiden Formteile vorteilhafterweise auch eine Dichtung zwischen den beiden Formteilen ermöglichen.

In einer weiteren Ausführungsform weist das Verbindungselement stabförmige Schubelemente auf, welche schubflexibel verformbar sind. Ähnlich den lamellenförmigen Schubelementen erlauben die elastischen stabförmigen Elemente unter Schubspannung aufgrund von Wärmebelastung eine Verschiebung der beiden Formteile gegeneinander. Diese Ausführungsform kann beispielsweise derart gestaltet sein, dass die stabförmigen Schubelemente an ihren Enden über Endelemente miteinander verbunden sind. Dabei ist ein Endelement wiederum jeweils mit einem der Formteile verbunden. Die Verbindung eines Endelements mit einem Formteil kann beispielsweise mittels Kleben, Schrauben, Nieten, Clinchen erfolgen.

Lamellenförmige Elemente und stabförmige Elemente können auch in Kombination auftreten. Ebenso sind beliebige Abwandlungen der Lamellenform oder der Stabform möglich, soweit die Elemente eine ausreichende Stabilität sowie eine schubflexible Verbindung erlauben. Je nach Form und Material der Formteile muss das Verbindungselement eine ausreichende Stabilität zur Aufnahme der äußeren Kräfte (z.B. Windlast, Schwingungen) aufweisen. Zur Erhöhung der Stabilität können beispielsweise eine höhere Anzahl von Schubelementen vorgesehen sein. Auch die Dicke der Schubelemente bestimmen die Stabilität. Die Dicke kann beispielsweise auch über die Höhe der Elemente variieren.

Die Anzahl der Schubelemente, insbesondere die Anzahl von lamellenförmigen Schubelementen, beträgt bevorzugt mindestens 2 sowie bevorzugt maximal 8. Der Abstand der beiden zu verbindenden Formteile, und damit die Höhe eines Schubelements, beträgt bevorzugt mindestens 5 mm sowie bevorzugt maximal 30 mm. Die Dicke eines Schubelements, insbesondere eines lamellenförmigen Schubelements, beträgt bevorzugt mindestens 0,5 mm sowie bevorzugt maximal 2,5 mm. Die Dicke eines Endelementes beträgt bevorzugt mindestens 0,5 mm sowie bevorzugt maximal 4 mm. Ist das Verbindungselement neben Schubelementen aus Endelementen zusammengesetzt, reduziert sich die Höhe der Schubelemente entsprechend um die Dicke der Endelemente. Die Höhe der Schubelemente und die Dicke der Endelemente ergeben zusammen den Abstand der beiden Formteile zueinander, d.h. die Höhe des gesamten Verbindungselements.

Das Verbindungselement des erfindungsgemäßen Verbundbauteils kann beispielsweise mittels Extrusion hergestellt werden. Das Verbindungselement kann aber auch aus verschiedenen spritzgegossenen und/oder extrudierten Einzelteilen, die mittels eines Schweiß- oder Klebeprozesses verbunden werden, hergestellt werden.

Eine mögliche Anwendung des erfindungsgemäßen Verbundbauteils liegt in der Verscheibung von Fahrzeugdächern. Hierbei bildet das Fahrzeugdach aus Stahl eines der Formteile und die Scheibe aus Polycarbonat ein zweites Formteil. Die Polycarbonatscheibe ist in dem Fahrzeugdach in einen Rahmen eingelegt. In einem Randbereich, in dem sich der Stahlrahmen und die Polycarbonatscheibe überlappen, sind die beiden Formteile mittels des erfindungsgemäßen, schubflexibel verformbaren Verbindungselements aus elastischem Material, insbesondere Thermoplastisches Polyurethan (TPU), Thermoplastisches Elastomer (TPE), Kautschuk, verbunden. Bevorzugt ist an allen vier Außenkanten der Polycarbonatscheibe jeweils ein Verbindungselement vorgesehen.

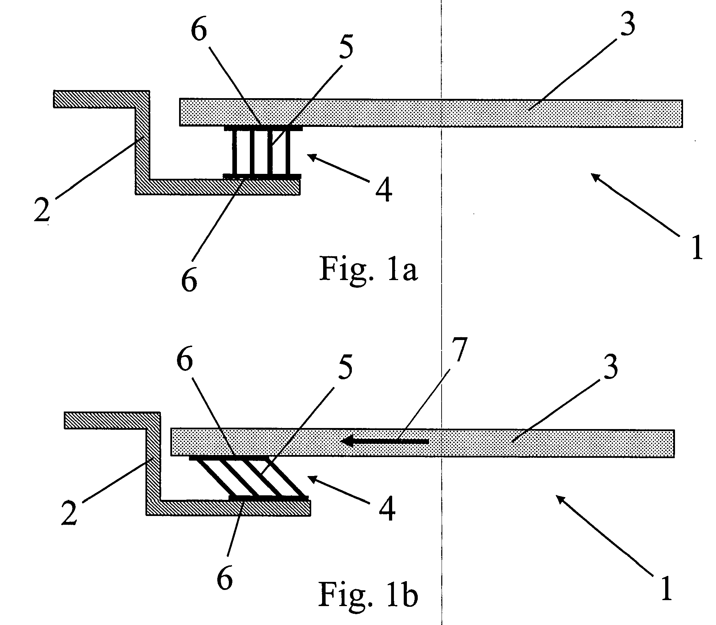

Nachfolgend wird die Erfindung anhand der beigefügten Zeichnungen näher erläutert. Es zeigen
- Figur 1a: eine schematische Darstellung einer Ausführungsform des erfindungsgemäßen Verbindungselements zur Verbindung zweier Formteile
- Figur 1b: eine schematische Darstellung des Verbindungselements aus Fig. 1a unter Schubspannung.

In Figur 1a ist eine Ausführungsform des erfindungsgemäßen Verbundbauteils 1 schematisch dargestellt. Ein Formteil 2, z.B. ein Rahmen eines Fahrzeugdachs aus Stahl, und ein Formteil 3, z.B. eine Scheibe aus Polycarbonat, sind mittels eines Verbindungselements 4 verbunden. Die beiden Formteile 2, 3 besitzen unterschiedliche Längenausdehnungskoeffizienten. Das Verbindungselement 4 ist aus elastischem Material, z.B. Thermoplastisches Polyurethan (TPU), und schubflexibel verformbar. In der dargestellten Ausführungsform weist das Verbindungselement 4 lamellenförmige Schubelemente 5 auf, die bei Temperaturänderung gegenüber den Längskräften biegeweich sind. Unter Zugbelastung sind die lamellenförmigen Schublemente 5 stabil. Die lamellenförmigen Elemente 5 sind an ihren oberen und unteren Enden, d.h. an den der Formteile 2, 3 zugewandten Enden, über Endelemente 6 miteinander verbunden. Die Endelemente 6 sind jeweils mit einem der Formteile 2, 3 verbunden.

Wie in Figur 1b schematisch dargestellt, treten unter Temperaturänderung Schubkräfte auf, die eine Verschiebung (durch den Pfeil 7 markiert) der beiden Formteile 2, 3 gegeneinander hervorrufen, ohne dass unerwünschte Verformungen der Formteile 2, 3 auftreten.

### Beispiele

### Beispiel 1

Die Verformung durch Wärmedehnung einer Polycarbonatscheibe in einem Stahlrahmen wurde rechnerisch anhand eines zweidimensionalen Modells eines Kraftfahrzeug-Dachmoduls ermittelt. In dem Vergleichsbeispiel war die Polycarbonatscheibe auf einen Stahlrahmen aufgeklebt. In dem Ausführungsbeispiel war, ähnlich wie in Figur 1a dargestellt, die Polycarbonatscheibe 3 mit einem Stahlrahmen 2 mittels eines Verbindungselements 4 mit 4 lamellenförmigen Schubelementen 5 verbunden. Die nachfolgende Tabelle 1 fasst die rechnerisch ermittelten Verformungs- und Spannungswerte bei einer Temperaturdifferenz von 100 K zusammen.

**Tabelle 1**

| **Art der Verbindung** | **max. Verformung [mm]** | **max. Spannung [MPa]** |
|---|---|---|
| Kleben (Vergleichsbeispiel) | 38,8 | 1,7 |
| Verbindungselement (Ausführungsbeispiel) | 0,4 | 0,06 |

### Beispiel 2

Die Verformung durch Wärmedehnung einer Polycarbonatscheibe in einem Stahlrahmen wurde rechnerisch anhand eines dreidimensionalen Modells eines Kraftfahrzeug-Dachmoduls ermittelt. In dem Vergleichsbeispiel war die Polycarbonatscheibe auf einen Stahlrahmen aufgeklebt. In dem Ausführungsbeispiel war, ähnlich wie in Figur 1a dargestellt, die Polycarbonatscheibe 3 mit einem Stahlrahmen 2 mittels eines Verbindungselements 4 mit 4 lamellenförmigen Schubelementen 5 verbunden. Die nachfolgende Tabelle 2 fasst die rechnerisch ermittelten maximalen Verformungswerte bei einer Temperaturdifferenz von 100 K zusammen.

**Tabelle 2**

| **Art der Verbindung** | **max. Verformung [mm]** |
|---|---|
| Kleben (Vergleichsbeispiel) | 9,7 |
| Verbindungselement (Ausführungsbeispiel) | 2,3 |

## Patentansprüche

1. Verbundbauteil wenigstens bestehend aus zwei Formteilen mit unterschiedlichen thermischen Längenausdehnungskoeffizienten, welche mittels wenigstens eines Verbindungselements aus einem elastischen Material verbunden sind, **dadurch gekennzeichnet, dass** das Verbindungselement wenigstens ein Schubelement aufweist, welches schubflexibel verformbar ist und ein Verhältnis von Höhe zu Dicke von 2 bis 60 aufweist.

2. Verbundbauteil nach Anspruch 1, **dadurch gekennzeichnet, dass** das Schubelement lamellenförmig ist.

3. Verbundbauteil nach Anspruch 1, **dadurch gekennzeichnet, dass** das Schubelement stabförmig ist.

4. Verbundbauteil nach einem der Ansprüche 1-3, **dadurch gekennzeichnet, dass** das elastische Material ein Kunststoff, insbesondere Thermoplastisches Polyurethan, Thermoplastisches Elastomer, Kautschuk, unverstärktes Polyamid, PP und/oder PE, ist.

5. Verbundbauteil nach einem der Ansprüche 1-4, **dadurch gekennzeichnet, dass** ein Formteil aus einem Metall, insbesondere Stahl, Aluminium, Magnesium, Kupfer, Titan und/oder einer Legierung dieser Metalle, ist.

6. Verbundbauteil nach einem der Ansprüche 1-5, **dadurch gekennzeichnet, dass** ein Formteil aus Kunststoff, insbesondere aus Polycarbonat, PMMA, ABS, ASA, PA, PBT, PP oder Blends aus diesen Kunststoffen, ist.
